# EUROPEAN PATENT SPECIFICATION

(11) **EP 2 659 084 B1**
(45) Date of publication and mention of the grant of the patent: **15.02.2017**
(21) Application number: 11831776.7
(22) Date of filing: 29.12.2011
(51) Int. Cl.: E21B 17/042, F16L 15/08, F16L 47/16

(54) **COUPLER WITH BONDING SURFACE**
KOPPLER MIT BONDING-OBERFLÄCHE
ACCESSOIRE DE COUPLAGE DOTÉ D'UNE SURFACE DE LIAISON

(30) Priority: 29.12.2010 IN CH40052010
(43) Date of publication of application: 06.11.2013
(73) Proprietor: Shand, Ajay, Bangalore 560027 (IN)
(72) Inventor: Shand, Ajay, Bangalore 560027 (IN)
(74) Representative: Heinze, Ekkehard
(86) International application number: PCT/IN2011/000906
(87) International publication number: WO 2012/090227

(56) References cited:
- JP-A- H10 212 890
- US-A- 5 971 443

## Description

### TECHNICAL FIELD

The present subject matter relates in general, to pipe systems and, particularly but not exclusively, to a coupler of the pipe system.

### BACKGROUND

Pipe systems typically transport fluids from one point to another. In underground applications, such as bore wells, the pipe systems extend from above the surface of the earth to several meters below the surface. Generally, in these underground pipe systems, a large capacity motor is used to draw water from the point of origin to a further point of interest.

Generally, the underground pipe systems are lengthy and drilled deep below the surface of the earth. In such cases, a simple method of assembly is adopted by utilizing short pipe sections that are coupled together using couplers. Each of the pipe sections has threaded portions on both sides and the coupler also includes threads, which correspond to the threads on the pipe section, by which the pipe section and the coupler are connected together. Water carrying pipes used in the pipe systems are typically made of Polyvinyl chloride (PVC), which renders the pipes corrosion-free and durable.

US Patent No. 5,971,443 describes a tubular threaded joint for a pipe system provided with a device opposed to over-screwing or unscrewing. The coupler is characterized by having at its ends two bonding surfaces of the same type. A similar coupler system is also described in the Japanese Patent Application No. 3255068.

### SUMMARY

The subject matter disclosed herein describes a coupler of a pipe system. In one embodiment, the coupler is provided with a first end to receive one end of a fixed pipe. The first end is provided with first internal threads corresponding to first external threads provided on the one end of the fixed pipe. Further, the coupler is provided with a second end to receive one end of a removable pipe, where the second end is provided with second internal threads corresponding to second external threads on the one end of the removable pipe. Moreover, the coupler is provided with a coupler bonding surface provided on an internal surface of the coupler between a central region of the coupler and the first internal threads of the first end. The coupler bonding surface corresponds to a fixed pipe bonding surface of the fixed pipe.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.
**Figure 1** illustrates a sectional view of a pipe-coupler unit in a disassembled state, the coupler having a bonding surface, in accordance with an embodiment of the present subject matter.
**Figure 2** illustrates a sectional view of a pipe-coupler unit in an assembled state, having a bonded joint, in accordance with an embodiment of the present subject matter.
**Figure 2a** illustrates an enlarged view of the bonded joint, in accordance with an embodiment of the present subject matter.

### DETAILED DESCRIPTION

Pipe systems are assembled by coupling a plurality of pipe sections with a plurality of couplers. The pipe sections and the couplers are usually threaded to facilitate fastening and dismantling of the pipe system by screwing. This task of coupling individual pipe sections through couplers, however, can prove to be time consuming and tedious in the field. Therefore, to simplify operations, a single pipe section is fixedly coupled with a single coupler to form a pipe-coupler unit and, subsequently, a plurality of such pipe-coupler units are coupled together to form the pipe system. Joints in the pipe system, such as pipe and coupler joints in the pipe-coupler unit, are critical load bearing joints and are indicative of the health of the pipe system. In a pipe system, the strength of the joint between the pipe and the coupler in the pipe-coupler unit is critical for maintaining the integrity of the pipe system.

Generally, to provide a firm joint between the pipe and coupler, a locking mechanism, in addition to the threaded coupling, is provided in the pipe-coupler unit. The locking mechanism fixedly couples the coupler to one end of a pipe section. The locking mechanism may be a wire lock element accommodated in a circular groove that is partially present in the pipe and partially present in the coupler. The wire lock element locks one end of the coupler with the pipe section to provide a fixed or non-removable joint. The other end of the coupler may engage another pipe in a removable manner. However, in order to provide the circular groove, the number of threads in the coupler may need to be reduced at the end where the circular groove is to be provided. As a result, due to an unequal number of threads on both ends of the coupler, a structural imbalance of forces under loading may be introduced. In certain cases, the length of the coupler can be increased so as to maintain the same number of threads in the coupler on both the ends. However, the quantity of material required to manufacture the coupler will increase, resulting in a substantial increase in infrastructure borne costs. In an example, under heaving loading, stress concentration points can be formed around the circular grooves provided in the coupler and the pipe section. This can result in loss in strength of the pipe system and can even lead to a collapse of the pipe system over a period of time if the stress is unchecked.

Furthermore, during de-coupling of the pipe-coupler unit, for example, during a maintenance procedure, it is possible that the fixed joint of the pipe-coupler unit is accidentally undone. This may result in the integrity of the pipe system being compromised and may further lead to a collapse of the pipe system.

The present subject matter relates to a coupler of a pipe system. In one embodiment, the coupler has a first and a second end. The coupler may be provided with first and second internal threads on the first end and the second end, respectively. In an example, a fixed pipe is provided with first external threads on its ends for connecting with the coupler via the first end of the coupler. The first external threads of the fixed pipe mesh with the first internal threads of the coupler and facilitate the coupling of the fixed pipe with the coupler. In an embodiment, the fixed pipe coupled with the coupler is referred to as a pipe-coupler unit.

In an embodiment, the fixed pipe is fitted to the coupler in a non removable manner. Furthermore, the coupler is provided with a coupler bonding surface adjacent to the first internal threads of the coupler. In an embodiment, a corresponding bonding surface is provided on the fixed pipe, such that the fixed pipe bonding surface overlaps with the coupler bonding surface in the assembled state of the fixed pipe and the coupler, i.e., when the fixed pipe is screwed into the first end of the coupler. Further, an adhesive, for example, solvent cement, is provided on the coupler bonding surface, such that the fixed pipe bonding surface binds with the coupler bonding surface to form a bonded joint. The adhesive is applied on the coupler bonding surface before joining the fixed pipe with the coupler, so as to prevent the adhesive from spreading into the threads. Thus, when the fixed pipe is screwed into the coupler, the fixed pipe bonding surface comes in contact with the adhesive applied on the coupler bonding surface and binds with the coupler bonding surface, forming the bonded joint.

In addition, a removable pipe may be coupled to the second end of the coupler. Furthermore, the removable pipe may be joined to the second end of the coupler by means of threads. In an example, the removable pipe may be a fixed pipe of a subsequent pipe-coupler unit. In this manner, a plurality of the pipe-coupler units may be coupled together to form the pipe system.

The threaded portion of the fixed pipe may be coupled to an equally threaded fixed pipe end of the coupler, and a bonded joint is formed therein due to the presence of the adhesive in the coupler. This bonded joint acts as a permanent joint such that it is not un-coupled or unthreaded during the dismantling of the pipe-coupler unit.

Applying the adhesive for binding the fixed pipe with the coupler assists in facilitating a substantially strong joint capable of arresting any movement of the fixed pipe inside the coupler. During disassembly of the pipe-coupler unit, the bonded joint prevents accidental de-coupling of the fixed pipe and the coupler. Further, providing the bonded joint increases the load bearing capacity of the pipe-coupler unit.

In an embodiment, the fixed pipe bonding surface may be provided with a taper. In an example, the taper is provided by reducing an outer diameter of the fixed pipe towards a peripheral edge of the one end of the fixed pipe. According to said embodiment, the coupler bonding surface may be provided with a taper corresponding to the taper of the fixed pipe bonding surface. In an example, the taper of the coupler bonding surface may be provided by reducing an inner diameter of the coupler towards a region away from the first end of the coupler.

In an embodiment, the adhesive used to couple the fixed pipe to the coupler may be solvent cement or any cement or adhesive, which is used to fasten two PVC pipes.

These and other aspects of the present subject matter are described in greater detail in conjunction with the figures.

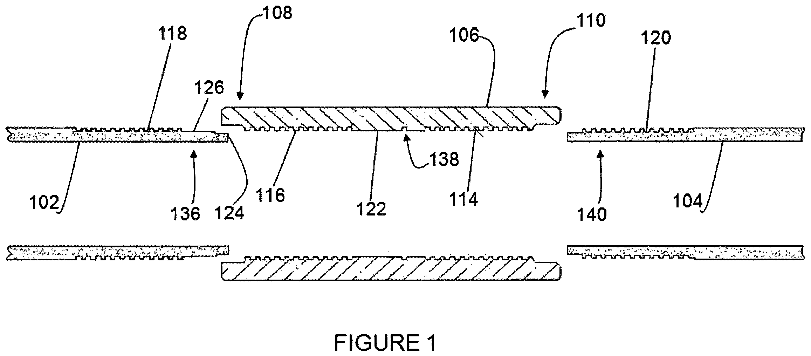

**Figure 1** illustrates a sectional view of a coupler **106** of a pipe-coupler unit **100** in a disassembled state, the coupler **106** having a coupler bonding surface **122** in accordance with an embodiment of the present subject matter.

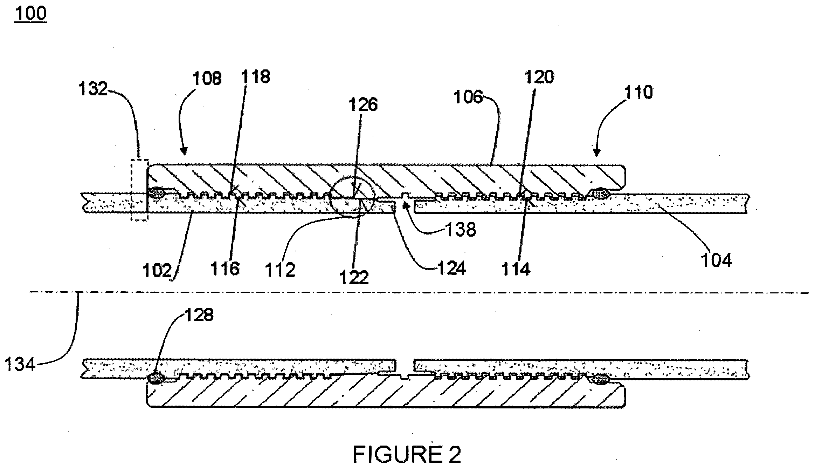

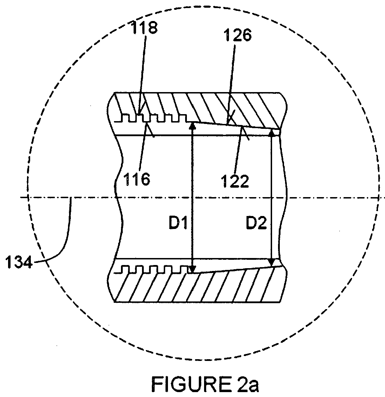

In an embodiment, the coupler **106** has two ends, namely a first end **108,** to receive a fixed pipe **102,** and a second end **110,** to which a removable pipe **104** may be joined. Furthermore, the coupler **106** has a central region **138.** In an example, the central region **138** is located internally at a midpoint of a length of the coupler **106.** The length of the coupler **106** may be measured along a longitudinal axis (shown in **figure 2**) of the coupler **106,** from a peripheral edge of the first end **108,** to a peripheral edge of the second end **110.**

In one embodiment, the first end **108** of the coupler **106** is provided with first internal threads **116** disposed on an inner surface of the coupler **106.** Further, corresponding first external threads **118** are provided on an outer surface of one end **136** of the fixed pipe **102.** The first external threads **118** of the fixed pipe **102** are provided such that they may mesh with the first internal threads **116** in the coupler **106** to join the fixed pipe **102** with the coupler **106.** Furthermore, the second end **110** of the coupler **106** is provided with second internal threads **114** disposed on the inner surface of the coupler **106.** Correspondingly, second external threads **120** are provided on an outer surface of one end **140** of the removable pipe **104,** such that the second external threads **120** may mesh with the second internal threads **114,** to join the removable pipe **104** with the coupler **106.** In an implementation, the first internal threads **116,** the first external threads **118,** the second internal threads **114** and the second external threads **120** may be provided with a square thread profile, or with a triangular thread profile, or with a trapezoidal thread profile. In an implementation, the first internal threads **116** and the second internal threads **114** are equal in number to the first external threads **118** and the second external threads **120,** respectively. Such a configuration of the threads provides symmetry to the pipe-coupler unit **100** and imparts equal load distribution.

In one embodiment, the coupler **106** is provided with a coupler bonding surface **122.** In an embodiment, the coupler bonding surface **122** is provided on an internal surface of the coupler **106,** between the first internal threads **116** and the central region **138** of the coupler **106,** such that the first internal threads **116** extend up to the coupler bonding surface **122,** as shown in **figure 1****.** Furthermore, in an embodiment, a fixed pipe bonding surface **126** is provided on an external surface of the fixed pipe **102,** between a peripheral edge **124** of the coupler end **136** of the fixed pipe **102** and the first external threads **118,** as shown in **figure 1****.** The coupler bonding surface **122** and the fixed pipe bonding surface **126** are provided such that the fixed pipe bonding surface **126** overlaps with the coupler bonding surface **122** when the fixed pipe **102** is coupled with the coupler **106.** In one implementation, a width of the fixed pipe bonding surface **126** is equal to a width of the coupler bonding surface **122.** In an example, the fixed pipe bonding surface **126** and the coupler bonding surface **122** have a width between about 10 mm and 25 mm. Furthermore, the width of the fixed pipe bonding surface **126**, and the coupler bonding surface **122** is measured along a longitudinal axis **134** (shown in **figure 2**) of the pipe-coupler unit **100.**

The fixed pipe **102** and the coupler **106** may be made of polyvinyl chloride (PVC) material that is lightweight and has non-corrosive properties.

**Figure 2** illustrates a sectional view of the pipe-coupler unit **100** in an assembled state, having a bonded joint **112,** in accordance with an embodiment of the present subject matter.

In an embodiment, the pipe-coupler unit **100** includes the fixed pipe **102** and the coupler **106.** As mentioned earlier, the pipe-coupler unit **100** is formed by screwing the fixed pipe **102** into the coupler **106** via the first end **108** of the coupler **106.**

In one embodiment, an adhesive, such as solvent cement, is applied on the coupler bonding surface **122** prior to the assembly of the pipe-coupler unit 100, such that the fixed pipe bonding surface **126** binds with the coupler bonding surface **122** to form a joint, also referred to as the bonded joint **112,** as shown in **figure 2****.** In an example, in case the adhesive is a solvent cement, the solvent cement can include a solvent and a polymer resin that is also used in the manufacture of the pipe systems. In an example, the solvent can be a volatile compound capable of dissolving polymer compounds, such as PVC. The adhesive is generally formulated to facilitate pipe systems to withstand operational pressures and vibrations. According to the present subject matter, prior application of the adhesive on the coupler bonding surface **122** prevents the adhesive from spreading onto the first internal threads **116** and the first external threads **118**.In an implementation, the pipe-coupler unit **100** may be constructed in two phases. In the first phase, the fixed pipe **102** is fixedly joined with the coupler **106,** and in the second phase, the removable pipe **104** may be coupled with the coupler **106.**

In the first phase, initially, a primer may be used to clean and pre-soften the coupler bonding surface 122 and the fixed pipe bonding surface 126. The adhesive is then applied on the coupler bonding surface **122** and is allowed to set on the coupler bonding surface **122.** The time taken for the adhesive to set on the coupler bonding surface **122** may vary, depending on room temperature and dimensions of the fixed pipe **102.** In an implementation, when the adhesive used is solvent cement, the solvent in the solvent cement dissolves the surface of the coupler bonding surface **122** by penetrating an inner diameter of the coupler. In an example, the grade of adhesive can be selected depending on an ambient temperature. The range of temperature of operation of the adhesive generally varies between a range of about - 30 °C to about 45 °C. In another example, depending on the environmental laws of a region, volatile organic compound (VOC) solvent cements may be used as adhesives. VOC solvent cements are specially formulated to meet VOC emission requirements in certain jurisdictions.

In an example, the time taken for the adhesive to set on the coupler bonding surface **122** may be less than about two minutes from the time the adhesive is applied on the coupler bonding surface **122.** Certain adhesives are of a fast setting type, for example, suited for wet conditions.

Once the adhesive is applied on the coupler bonding surface **122,** the fixed pipe **102** is screwed into the first end **108** of the coupler **106** such that the first external threads **118** of the fixed pipe **102** mesh with the first internal threads **116** of the coupler **106,** and subsequently the fixed pipe bonding surface **126** aligns with the coupler bonding surface **122.** In another example, the fixed pipe **102** may be screwed into the first end **108** of the coupler **106** immediately after the adhesive is applied on the coupler bonding surface **122.**

In an implementation, the adhesive can be applied on the coupler bonding surface **122** to soften the coupler bonding surface **122.** Furthermore, when the fixed pipe bonding surface **126** comes in contact with the coupler bonding surface **122,** due to a reactive action of the adhesive, the polymer resin in the adhesive then intermeshes the coupler bonding surface **122** and the fixed pipe bonding surface **126.** Simultaneously, the solvent in the adhesive may continue to soften and dissolve the materials of the coupler bonding surface **122** and the fixed pipe bonding surface **126.** Furthermore, due to an interference fit between the coupler bonding surface **122** and the fixed pipe bonding surface **126,** the softened surfaces weld together to form the bonded joint **112.**

In an implementation, the bonded joint **112** can then be held stable and external pressure can be applied to facilitate the formation of a strong joint. In addition, to strengthen the bonded joint **112,** the bonded joint **112** can be taken through a process of curing. Curing refers to a process by which toughening or hardening of a polymer material is brought about by chemical additives. In an example, during the curing process, the solvent in the adhesive evaporates until a proper handling strength is imparted to the joint formed therein, and ultimately leading to a fully cured bonded joint **112.** The time taken by the adhesive to bind the fixed pipe bonding surface **126** with the coupler bonding surface **122,** referred to as curing time, may vary, depending on the size of the fixed pipe **102,** adhesive type, amount of adhesive applied, humidity, wind velocity, and the ambient temperature. For example, a fixed pipe of larger diameter will cure at slower rates as compared to a fixed pipe of smaller diameter. Adhesives formulated for faster set times will have smaller cure times as compared to adhesives formulated for slower set times. Furthermore, over-application of adhesive will cause a much slower curing time as the volume of solvent is greater, thus taking longer to evaporate. Further, the higher the humidity, the slower the curing time due to excess atmospheric moisture that retards rate of evaporation of the solvent in the adhesive. When adhesive is applied in areas of wind velocity of over 10 mph, faster curing times are provided due to escalated rates of evaporation. Moreover, the higher the ambient temperature, the faster the cure. Based on aforesaid conditions, the curing time may be in a range between about 20 and 30 hours to impart handling strength to the bonded joint **112.** Once the bonded joint **112** is properly cured, the pipe system may undergo pressure testing to test the strength of the bonded joint **112.**

Table 1 provided below illustrates examples of curing time for different pipe diameters as well as temperature ranges. The relative humidity in the following illustration is maintained at approximately 60 % or less, and the standard pressure testing occurs at two stages, i.e., up to 180 psi and above 180 psi of pressure. The following values are provided for illustrational purposes only and should not be construed as a limitation as field conditions may vary.

**Table 1**

| **Relative Humidity 60% or less** | **Pipe Diameter 1.27 cm to 3.175 cm** | | **Pipe Diameter 3.81 cm to 7.62 cm** | | **Pipe Diameter 10.16 cm to 12.7 cm** | | **Pipe Diameter 15.24 cm to 20.32 cm** | | **Pipe Diameter 25.4 cm to 40.64 cm** | **Pipe Diameter 45.64 cm +** |
|---|---|---|---|---|---|---|---|---|---|---|
| Temp during cure period | Up to 1241.1 kPa | 1241.1 kPa + | Up to 1241.1 kPa | 1241.1 kPa + | Up to 1241.1 kPa | 1241.1 kPa + | Up to 1241.1 kPa | 1241.1 kPa + | Up to 689.5 kPa | Up to 689.5 kPa |
| 16°C - 38°C | 1 h | 6 h | 2 h | 12 h | 6 h | 18 h | 8 h | 24 h | 24 h | 36 h |
| 4°C - 16°C | 2 h | 12 h | 4 h | 24 h | 12 h | 36 h | 16 h | 48 h | 48 h | 72 h |
| -7°C - 4°C | 6 h | 36 h | 12 h | 72 h | 36 h | 96 h | 72 h | 216 h | 192 h | 288 h |
| -18°C - -7°C | 8 h | 48 h | 16 h | 96 h | 48 h | 192 h | 96 h | 288 h | 240 h | 336 h |

The adhesive assists in facilitating a strong bonded joint **112** for binding the fixed pipe **102** with the coupler **106**. This bonded joint **112** is capable of arresting the movement of the fixed pipe **102** inside the coupler **106,** and is therefore beneficial during the disassembly of the pipe-coupler unit **100.** Moreover, the bonded joint **112** provides additional load bearing capacity of the pipe-coupler unit **100.**
In one embodiment, the coupler bonding surface **122** may be provided with an uneven surface or a friction surface, for example, by providing substantially fine grooves. The uneven surface facilitates the binding between the coupler bonding surface **122** and the fixed pipe bonding surface **126.**

In another embodiment, the coupler bonding surface **122** is provided with a tapering surface narrowing towards a central longitudinal axis **134** of the pipe-coupler unit **100.** In said embodiment, the taper of the coupler bonding surface **122** may be provided by reducing an inner diameter of the coupler **106** towards a region away from the first end **108** of the coupler **106.**

Further, in said embodiment, the fixed pipe bonding surface **126** is configured with a taper, narrowing towards the central longitudinal axis **134** of the pipe-coupler unit **100,** corresponding to the taper of the coupler bonding surface **122.** Such tapered configurations of the coupler bonding surface **122** and the fixed pipe bonding surface **126** ensures efficient fitting and alignment of the fixed pipe bonding surface **126** with the coupler bonding surface **122.**

In the second phase of construction of the pipe coupler unit **100,** the removable pipe **104** may be coupled with the second end **110** of the coupler **106** via the second internal threads **114** of the coupler **106** and second external threads **120** of the removable pipe **104.** The removable pipe **104** is joined at the second end **110** of the coupler **106** such that the second external threads **120** of the removable pipe **104** mesh with the second internal threads **114** of the coupler **106** to form a removable joint. The removable joint enables dismantling of removable pipe **104** and the coupler **106.** In an implementation, the removable pipe **104** may be a fixed pipe of a subsequent pipe-coupler unit **100.** As described earlier, by coupling a plurality of these pipe-coupler units **100,** the pipe system may be constructed.

In addition, coupling of both the fixed pipe **102** and the removable pipe **104** with the coupler **106** may be made leak proof by providing a sealing ring **128.** In one embodiment, the sealing ring **128** is provided to serve as an additional safeguard to prevent leakage of fluid from the fixed pipe **102** and penetration of fluid into the pipe-coupler unit **100.** In said embodiment, the sealing ring **128** is disposed in a groove provided on the external surface of the fixed pipe **102.** Further, a groove can also be provided in the internal surface of the coupler to receive the sealing ring **128.** Therefore, the sealing ring **128** is disposed between the internal surface of the coupler **106** and the external surface of the fixed pipe **102.** In one implementation, the sealing ring **128** may be an O-ring.

Further, in an embodiment, a visible indication mechanism **132** may also be provided on the fixed pipe **102** adjacent to the first end **108** of the coupler 106 to provide an indication of an opening of the bonded joint **112** between the fixed pipe **102** and the coupler **106,** for example, in case of an accident. In one example, the visible indication mechanism **132** may be a wire lock. The visible indication mechanism **132** provides a simple visible aid in case of the opening of the bonded joint **112** of the fixed pipe **102** and the coupler **106** during assembly and disassembly of the pipe system.

**Figure 2a** illustrates an enlarged view of the bonded joint **112,** in accordance with one embodiment of the present subject matter.

In an embodiment, the taper of the coupler bonding surface **122** and the taper of the fixed pipe bonding surface **126** are provided such that the respective tapers narrow toward the central longitudinal axis **134** as described previously.

As shown in the figure, the taper of the coupler bonding surface **122** and the taper of the fixed pipe bonding surface **126** are provided such that a first outer diameter **D1** of the fixed pipe **102** measured adjacent to the first external threads **118** of the fixed pipe **102** is greater than a second outer diameter **D2** of the fixed pipe **102** adjacent to the peripheral edge **124** of the fixed pipe **102.**

Although the subject matter has been described in considerable detail with reference to certain embodiments thereof, other embodiments are possible. It is to be understood that the appended claims are not necessarily limited to the features described herein. Rather, the features are disclosed as embodiments of the coupler **106** and the pipe-coupler unit **100** having the bonded joint **112.**

## Claims

1. A coupler (106), for a pipe system, comprising:
a first end (108) to receive one end (136) of a fixed pipe (102), the first end (108) being provided with first internal threads (116) corresponding to first external threads (118) on the one end (136) of the fixed pipe (102); and
a second end (110) to receive one end (140) of a removable pipe (104), the second end (110) being provided with second internal threads (114) corresponding to second external threads (120) on the one end (140) of the removable pipe (104);
wherein the coupler (106) is **characterized by** comprising a coupler bonding surface (122) provided on an internal surface between a central region (138) of the coupler (106) and the first internal threads (116) of the first end (108), wherein the coupler bonding surface (122) corresponds to a fixed pipe bonding surface (126) of the fixed pipe (102); and
wherein the coupler bonding surface (122) is provided with an adhesive.

2. The coupler (106) of claim 1, wherein the coupler bonding surface (122) is tapered.

3. The coupler (106) of claim 1, wherein the coupler bonding surface (122) has a width between about 10 mm to about 25 mm.

4. The coupler (106) of claim 1, wherein the first internal threads (116) and the second internal threads (114) have one of a square thread profile, a triangular thread profile, and a trapezoidal thread profile.

5. The coupler (106) of claim 1 for use in a pipe-coupler unit (100), the pipe-coupler unit (110) comprising:
a fixed pipe (102), one end (136) of the fixed pipe (102) being provided with first external threads (118), wherein the fixed pipe (102) is further provided with a fixed pipe bonding surface (126) on an external surface between a peripheral edge (124) of the one end (136) and the first external threads (118);
a removable pipe (104), one end (140) of the removable pipe (104) being provided with second external threads (120); and
a coupler (106) having a first end (108) coupled to the one end (136) of the fixed pipe (102), the first end (108) having first internal threads (116) disposed on an inner surface of the coupler (106), the first internal threads (116) corresponding to the first external threads (118); and
the second end (110) coupled to the one end (140) of the removable pipe (104), wherein the second end (110) is provided with second internal threads (114) disposed on the inner surface of the coupler (106), the second internal threads (114) corresponding to the second external threads (120),
wherein the coupler (106) forms a bonded joint (112) with the fixed pipe bonding surface (126) in an assembled state of the pipe-coupler unit (100).

6. The coupler (106) for the use of claim 5, wherein the fixed pipe bonding surface (126) and the coupler bonding surface (122) is tapered.

7. The coupler (106) for the use of claim 5, wherein the adhesive is a solvent cement.

8. The coupler (106) for the use of claim 5, wherein the fixed pipe bonding surface (126) has a width between about 10 mm to about 25 mm.

9. The coupler (106) for the use of claim 5, wherein the coupler bonding surface (122) has a width between about 10 mm to about 25 mm.

10. The coupler (106) for the use of claim 5, wherein the first external threads (118) and the first internal threads (116) are equal in number.

11. The coupler (106) for the use of claim 6, wherein the first external threads (118) and the first internal threads (116) each have one of a square thread profile, a triangular thread profile, and a trapezoidal thread profile.

## Patentansprüche

1. Verbindungsstück (106) für ein Rohrsystem, Folgendes aufweisend:
ein erstes Ende (108) zur Aufnahme eines Endes (136) eines stationären Rohrs (102), wobei das erste Ende (108) mit ersten Innengewindegängen (116) versehen ist, die ersten Außengewindegängen (118) an dem einen Ende (136) des stationären Rohrs (102) entsprechen; und
ein zweites Ende (110) zur Aufnahme eines Endes (140) eines abnehmbaren Rohrs (104), wobei das zweite Ende (110) mit zweiten Innengewindegängen (114) versehen ist, die zweiten Außengewindegängen (120) an dem einen Ende (140) des abnehmbaren Rohrs (104) entsprechen;
wobei das Verbindungsstück (106) **dadurch gekennzeichnet ist, dass** es eine Verbindungsstückklebefläche (122) aufweist, die auf einer Innenfläche zwischen einem zentralen Bereich (138) des Verbindungsstücks (106) und den ersten Innengewindegängen (116) des ersten Endes (108) vorgesehen ist, wobei die Verbindungsstückklebefläche (122) einer Stationärrohrklebefläche (126) des stationären Rohrs (102) entspricht; und
wobei die Verbindungsstückklebefläche (122) mit einem Klebstoff versehen ist.

2. Verbindungsstück (106) nach Anspruch 1, wobei die Verbindungsstückklebefläche (122) konisch zuläuft ist.

3. Verbindungsstück (106) nach Anspruch 1, wobei die Verbindungsstückklebefläche (122) eine Breite von ca. 10 mm bis ca. 25 mm hat.

4. Verbindungsstück (106) nach Anspruch 1, wobei die ersten Innengewindegänge (116) und die zweiten Innengewindegänge (114) ein quadratisches Gewindeprofil, ein dreieckiges Gewindeprofil oder ein trapezförmiges Gewindeprofil haben.

5. Verbindungsstück (106) nach Anspruch 1 zur Verwendung in einer Rohr-/Verbindungsstückeinheit (100), wobei die Rohr-/Verbindungsstückeinheit (100) aufweist:
ein stationäres Rohr (102), wobei ein Ende (136) des stationären Rohrs (102) mit ersten Außengewindegängen (118) versehen ist, wobei das stationäre Rohr (102) darüber hinaus mit einer Stationärrohrklebefläche (126) auf einer Außenfläche zwischen einem Umfangsrand (124) des einen Endes (136) und den ersten Außengewindegängen (118) versehen ist;
ein abnehmbares Rohr (104), wobei ein Ende (140) des abnehmbaren Rohrs (104) mit zweiten Außengewindegängen (120) versehen ist; und
ein Verbindungsstück (106) mit einem ersten Ende (108), das an das eine Ende (136) des stationären Rohrs (102) angeschlossen ist, wobei das erste Ende (108) erste Innengewindegänge (116) hat, die auf einer Innenfläche des Verbindungsstücks (106) angeordnet sind, wobei die ersten Innengewindegänge (116) den Außengewindegängen (118) entsprechen; und
das zweite Ende (110) an das an das eine Ende (140) des abnehmbaren Rohrs (104) angeschlossen ist, wobei das zweite Ende (110) mit zweiten Innengewindegängen (114) versehen ist, die auf der Innenfläche des Verbindungsstücks (106) vorgesehen sind, wobei die zweiten Innengewindegänge (114) den zweiten Außengewindegängen (120) entsprechen,
wobei das Verbindungsstück (106) in einem zusammengesetzten Zustand der Rohr-/Verbindungsstückeinheit (100) eine Klebeverbindung (112) mit der Stationärrohrklebefläche (126) bildet.

6. Verbindungsstück (106) zur Verwendung nach Anspruch 5, wobei die Stationärrohrklebefläche (126) konisch zulaufend ist.

7. Verbindungsstück (106) zur Verwendung nach Anspruch 5, wobei es sich bei dem Klebstoff um einen Lösungsmittel-Zement handelt.

8. Verbindungsstück (106) zur Verwendung nach Anspruch 5, wobei die Stationärrohrklebefläche (126) eine Breite von ca. 10 mm bis ca. 25 mm hat.

9. Verbindungsstück (106) zur Verwendung nach Anspruch 5, wobei die Verbindungsstückklebefläche (122) eine Breite von ca. 10 mm bis ca. 25 mm hat.

10. Verbindungsstück (106) zur Verwendung nach Anspruch 5, wobei die ersten Außengewindegänge (118) und die ersten Innengewindegänge (116) von der Anzahl her gleich sind.

11. Verbindungsstück (106) zur Verwendung nach Anspruch 5, wobei die ersten Außengewindegänge (118) und die ersten Innengewindegänge (116) jeweils ein quadratisches Gewindeprofil, ein dreieckiges Gewindeprofil oder ein trapezförmiges Gewindeprofil haben.

## Revendications

1. Coupleur (106) pour un système de tuyau, comprenant :
une première extrémité (108) pour recevoir une extrémité (136) d'un tuyau fixe (102), la première extrémité (108) étant pourvue de premiers filetages intérieurs (116) correspondant à des premiers filetages extérieurs (118) sur l'une extrémité (136) du tuyau fixe (102) ; et
une deuxième extrémité (110) pour recevoir une extrémité (140) d'un tuyau amovible (104), la deuxième extrémité (110) étant pourvue de deuxièmes filetages intérieurs (114) correspondant à des deuxièmes filetages extérieurs (120) sur l'une extrémité (140) du tuyau amovible (104) ;
sachant que le coupleur (106) est **caractérisé en ce qu'**il comprend une surface de collage de coupleur (122) prévue sur une surface interne entre une région centrale (138) du coupleur (106) et les premiers filetages intérieurs (116) de la première extrémité (108), sachant que la surface de collage de coupleur (122) correspond à une surface de collage de tuyau fixe (126) du tuyau fixe (102) ; et
sachant que la surface de collage de coupleur (122) est pourvue d'un adhésif.

2. Le coupleur (106) de la revendication 1, sachant que la surface de collage de coupleur (122) est conique.

3. Le coupleur (106) de la revendication 1, sachant que la surface de collage de coupleur (122) a une largeur comprise entre environ 10 mm et environ 25 mm.

4. Le coupleur (106) de la revendication 1, sachant que les premiers filetages intérieurs (116) et les deuxièmes filetages intérieurs (114) ont l'un d'un profil de filetage carré, d'un profil de filetage triangulaire, et d'un profil de filetage trapézoïdal.

5. Le coupleur (106) de la revendication 1, destiné à être utilisé dans une unité de coupleur de tuyau (100), l'unité de coupleur de tuyau (110) comprenant :
un tuyau fixe (102), une extrémité (136) du tuyau fixe (102) étant pourvue de premiers filetages extérieurs (118), sachant que le tuyau fixe (102) est en outre pourvu d'une surface de collage de tuyau fixe (126) sur une surface externe entre un bord périphérique (124) de l'une extrémité (136) et les premiers filetages extérieurs (118) ;
un tuyau amovible (104), une extrémité (140) du tuyau amovible (104) étant pourvue de deuxièmes filetages extérieurs (120) ; et
un coupleur (106) ayant une première extrémité (108) couplée à l'une extrémité (136) du tuyau fixe (102), la première extrémité (108) ayant des premiers filetages intérieurs (116) disposés sur une surface intérieure du coupleur (106), les premiers filetages intérieurs (116) correspondant aux premiers filetages extérieurs (118) ; et
la deuxième extrémité (110) couplée à l'une extrémité (140) du tuyau amovible (104), sachant que la deuxième extrémité (110) est pourvue de deuxièmes filetages intérieurs (114) disposés sur la surface intérieure du coupleur (106), les deuxièmes filetages intérieurs (114) correspondant aux deuxièmes filetages extérieurs (120),
sachant que le coupleur (106) forme un joint collé (112) avec la surface de collage de tuyau fixe (126) dans un état assemblé de l'unité de coupleur de tuyau (100).

6. Le coupleur (106) destiné à être utilisé selon la revendication 5, sachant que la surface de collage de tuyau fixe (126) et la surface de collage de coupleur (122) est conique.

7. Le coupleur (106) destiné à être utilisé selon la revendication 5, sachant que l'adhésif est un ciment à solvant.

8. Le coupleur (106) destiné à être utilisé selon la revendication 5, sachant que la surface de collage de tuyau fixe (126) a une largeur comprise entre environ 10 mm et environ 25 mm.

9. Le coupleur (106) destiné à être utilisé selon la revendication 5, sachant que la surface de collage de coupleur (122) a une largeur comprise entre environ 10 mm et environ 25 mm.

10. Le coupleur (106) destiné à être utilisé selon la revendication 5, sachant que les premiers filetages extérieurs (118) et les premiers filetages intérieurs (116) sont égaux en nombre.

11. Le coupleur (106) destiné à être utilisé selon la revendication 6, sachant que les premiers filetages extérieurs (118) et les premiers filetages intérieurs (116) ont chacun l'un d'un profil de filetage carré, d'un profil de filetage triangulaire, et d'un profil de filetage trapézoïdal.
